# FASCICULE DE BREVET EUROPEEN

(11) **EP 1 169 141 B1**
(45) Date de publication et mention de la délivrance du brevet: **21.01.2004**
(21) Numéro de dépôt: 00910941.4
(22) Date de dépôt: 14.03.2000
(51) Int. Cl.: B05D 5/08, C09D 171/00, A47J 36/02, C09D 127/12

(54) **REVETEMENT ANTI-ADHESIF PRESENTANT UNE RESISTANCE AMELIOREE A LA RAYURE**
ANTIHAFTBESCHICHTUNG MIT VERBESSERTER KRATZFESTIGKEIT
ANTIADHESIVE COATING WITH IMPROVED ANTI-SCRATCH RESISTANCE

(30) Priorité: 16.03.1999 FR 9903241
(43) Date de publication de la demande: 09.01.2002
(73) Titulaire: SEB S.A., 69130 Ecully (FR)
(72) Inventeur: BUFFARD, Jean-Pierre, 73100 Aix les Bains (FR); FONTAINE, Michel, F-74150 Sales (FR); GARDAZ, Claudine, 74150 Rumilly (FR)
(74) Mandataire: Somnier, Jean-Louis
(86) Numéro de dépôt international: PCT/FR2000/000616
(87) Numéro de publication internationale: WO 2000/054895

(56) Documents cités:
- EP-A- 0 100 889
- EP-A- 0 343 282
- EP-A- 0 367 884
- EP-A- 0 786 290
- WO-A-89/00757
- US-A- 5 536 583
- US-A- 5 846 645

## Description

La présente invention concerne un revêtement anti-adhésif présentant une résistance améliorée à la rayure.

On connaît des revêtements anti-adhésifs appliqués sur des ustensiles culinaires. On sait que ces revêtements sont sensibles aux rayures.

Pour améliorer la résistance de ces revêtements aux rayures, ceux-ci sont actuellement appliqués sur une sous-couche dure en alumine, émail, acier inoxydable, polyamide-imide (PAI).

Cette sous-couche forme en principe une barrière qui empêche que les rayures n'atteignent la surface du substrat.

Le but de la présente invention est de créer un revêtement anti-adhésif présentant une résistance à la rayure améliorée par rapport aux revêtements connus tout en conservant une excellente antiadhérence.

L'invention vise ainsi un revêtement anti-adhésif présentant une résistance améliorée à la rayure, comportant une sous-couche appliquée sur un substrat, recouverte par une couche primaire renfermant une résine fluorocarbonée et une ou plusieurs couches de finition à base de résine fluorocarbonée.

Suivant l'invention, le revêtement anti-adhésif est caractérisé en ce que ladite sous-couche est constituée essentiellement de polymère
Oxy-1.4 phenylène - oxy 1-4 phenylène carbonyle 1-4 phenylène appelé PEEK, polyetherethercétone .

Ce polymère a pour formule :

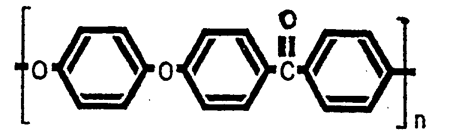

Le PEEK a déjà été utilisé dans des formulations de revêtements anti-adhésifs, en mélange avec une résine fluorocarbonée telle que du polytétrafluoréthylène (PTFE).

Cependant, le PEEK n'a jamais été utilisé, sans être mélangé avec une résine fluorocarbonée pour constituer une sous-couche dure.

Il a été constaté de façon surprenante qu'un revêtement anti-adhésif appliqué sur une sous-couche à base de PEEK présentait une résistance améliorée à la rayure.

Le revêtement anti-adhésif devient ainsi utilisable avec des spatules métalliques.

Il a été constaté que la sous-couche de PEEK recouvrait entre 60 et 95% de la surface totale revêtue du substrat.

Cette sous-couche est ainsi discontinue et forme un réseau très dense qui laisse 5 à 40% de la surface non couverte. Les caractéristiques mécaniques du polyétheréthercétone associées à la configuration de ce réseau suppriment les rayures au métal lors de l'utilisation des spatules métalliques.

Ceci représente un compromis idéal qui permet d'améliorer à la fois la dureté de l'aluminium et l'élasticité du PTFE.

On notera ici que le réseau pourrait devenir continu sur une surface rugueuse ou bien couvrir moins de 60% sans rien changer à l'invention.

L'épaisseur de cette sous-couche peut, suivant les cas, varier de 5 à 100 µm.

La résine fluorocarbonée utilisée dans la couche primaire et la ou les couches de finition est de préférence du polytétrafluoréthylène (PTFE), ou un mélange PTFE/PFA.

L'invention vise en particulier les ustensiles culinaires revêtus à l'intérieur ou à l'extérieur par un revêtement anti-adhésif appliqué sur une sous-couche constituée à 100 % de PEEK.

Le substrat de ces ustensiles peut être en aluminium, en acier émaillé ou non, en verre, en poterie, en émail. Le support peut être lisse ou rendu rugueux par traitement mécanique ou chimique.

Avant l'application de la sous-couche à base de PEEK, le substrat peut être ou non traité chimiquement par exemple par attaque acide ou mécaniquement par exemple par sablage.

La sous-couche de PEEK peut être appliquée sur le substrat à température ambiante ou chauffée jusqu'à 450°C environ, sous forme de poudre ou en dispersion.

Elle peut aussi être appliquée par sérigraphie ou tampographie à l'état de pâté, dans ce cas la composition de la sous-couche appliquée peut être la suivante :

| | | |
|---|---|---|
| PEEK | 30 à 400 ] | parties en poids |
| Agent épaississant | 1 à 10 ] | |
| Diluant | 10 à 450 ] | |
| Eau | 100 à 300 ] | |

Les constituants autres que le PEEK disparaissent lors de la cuisson de sorte que, après cuisson, la sous-couche est constituée exclusivement de PEEK.

La granulométrie de la poudre de PEEK utilisée peut- être comprise entre 4 et 80 microns, la granulométrie moyenne étant égale à environ 20 µm.

Selon le mode d'application il peut être nécessaire de porter cette sous-couche à une température au moins égale à 340°C. On applique ensuite sur cette sous-couche successivement la couche de primaire et la ou les couches de finition à base de PTFE, puis on cuit l'ensemble des couches à 400-420°C.

On donne ci-après à titre d'exemple, la composition des couches qui sont appliquées successivement sur la sous-couche de PEEK :

### Couche Primaire

| **Constituants** | **Parties en poids** |
|---|---|
| Dispersion aqueuse de polyamide-imide à 13% d'extrait sec environ | 100 à 500 |
| N. Méthylpyrrolidone | 100 |
| Dispersion PTFE 60% d'extrait sec | 100 à 400 |
| Eau | 100 |
| Noir de carbone à 20% d'extrait sec | 20-30 |
| Silice colloïdale 30% d'extrait sec | 10-200 |

### Couche de finition intermédiaire

| | Parties en poids |
|---|---|
| Dispersion PTFE à 60% d'extrait sec | 80 à 90 |
| Dispersion PFA 6900 à 50% d'extrait sec | 0.5 à 5.0 |
| Agent d'étalement et filmogène | 1 à 20 |
| Paillettes mica recouvertes TiO₂ | 0.1 à 0.4 |
| Derusol "Noir de carbone à 25% d'extrait sec" | 0.02 à 0.6 |

### Couche de finition supérieure

| | Parties en poids |
|---|---|
| Dispersion PTFE à 60% d'extrait sec | 80 à 90 |
| Agent d'étalement et filmogène | 1 à 20 |
| Paillettes mica recouvertes TiO₂ | 0.1 à 0.4 |

Après séchage l'ensemble des couches ci-dessus est ensuite fritté à 400-420°C pendant 5 à 10 minutes.

On obtient un revêtement anti-adhésif doté de propriétés améliorées.

En effet, comparées à un revêtement classique, les duretés mesurées selon norme NF 21-511 à différentes températures donnent les résultats suivants :

| | | | |
|---|---|---|---|
| **Dureté** Test de l'enfoncement d'une bille | 20°C | 100°C | 180°C |
| Revêtement PTFE avec PEEK | 3.4 kg | 3.4 kg | 1.7-2.0 kg |
| Revêtement classique, sans sous-couche | 1.8 kg | 1.7 kg | 1.6 kg |

Et surtout à l'utilisation en cuisson réelle d'aliments, les performances de résistance à l'agression de spatules métalliques sont étonnantes. Après des cycles de cuisson, grillades, friture de différents aliments correspondant à 2 ans d'utilisation, la surface du revêtement est à peine rayée, sans que le métal soit atteint.

En fait, il constitue le premier système de revêtement avec sous-couche apportant vraiment une amélioration de la résistance à la rayure avec emploi d'ustensiles métalliques hors couteaux car jusqu'à présent toutes les sous-couches testées n'apportaient pas vraiment de solutions satisfaisantes (plasma, alumine, titane, anodisation, et autres procédés de surface).

Evidemment, cette amélioration de résistance à la rayure est utilisable dans tous les domaines d'application, intérieurs et extérieur d'ustensiles de cuisine, petit électroménager : plaques de cuissons, plaques de grill et toutes surfaces de glissement tels les fers à repasser par exemple.

Bien entendu, l'invention n'est pas limitée à l'exemple que l'on vient de décrire et on peut apporter à celui-ci de nombreuses modifications sans sortir du cadre de l'invention.

## Revendications

1. Revêtement anti-adhésif présentant une résistance améliorée à la rayure, comportant une sous-couche appliquée sur un substrat, recouverte par une couche primaire renfermant une résine fluorocarbonée et une ou plusieurs couches de finition à base de résine fluorocarbonée, **caractérisé en ce que** ladite sous-couche est, après cuisson, constituée exclusivement de polymère oxy-1-4-phenylène-oxy-1-4-phenylène-carbonyle-1-4-phenylène appelé PEEK.

2. Revêtement conforme à la revendication 1, **caractérisé en ce que** la sous-couche constituée de PEEK recouvre entre 60 et 95% de la surface totale revêtue du substrat.

3. Revêtement conforme à l'une des revendications 1 ou 2, **caractérisé en ce que** l'épaisseur de la sous-couche est comprise entre 5 et 100µm.

4. Revêtement conforme à l'une des revendications 1 à 3, **caractérisé en ce que** ladite résine fluorocarbonée est du polytétrafluoréthylène (PTFE) ou un mélange PTFE-PFA (résine perfluoroalkoxy).

5. Ustensile culinaire revêtu par un revêtement conforme à l'une des revendications 1 à 4.

6. Procédé pour appliquer sur un substrat un revêtement conforme à l'une des revendications 1 à 4, **caractérisé par** les étapes suivantes :
- on applique sur le substrat la sous-couche constituée de PEEK,
- on fond cette sous-couche à une température au moins égale à 340°C,
- on applique sur cette sous-couche successivement la couche primaire et la ou les couches de finition à base de PTFE, puis,
- on cuit l'ensemble des couches à 400-420°C.

7. Procédé conforme à la revendication 6, **caractérisé en ce que** le PEEK est appliqué sous forme de poudre de granulométrie comprise entre 4 et 80 microns, la granulométrie moyenne étant égale à 20µm environ.

## Patentansprüche

1. Antihaftbeschichtung mit verbesserter Kratzfestigkeit mit einer auf einem Substrat aufgebrachten Unterschicht, die durch eine Primärschicht abgedeckt ist, die einen Fluorkunststoff einschließt, und einer oder mehreren Abschlußschichten auf der Grundlage von Fluorkunststoff, **dadurch gekennzeichnet, daß** die Unterschicht nach dem Härten ausschließlich aus dem Polymer Oxy-1,4-phenylen-oxy-1,4-phenylen-carbonyl-1,4-phenylen (genannt PEEK) besteht.

2. Beschichtung nach Anspruch 1, **dadurch gekennzeichnet, daß** die aus PEEK bestehende Unterschicht zwischen 60 und 95 % der gesamten beschichteten Fläche des Substrats bedeckt.

3. Beschichtung nach einem der Ansprüche 1 oder 2, **dadurch gekennzeichnet, daß** die Dicke der Unterschicht zwischen 5 und 100 µm beträgt.

4. Beschichtung nach einem der Ansprüche 1 bis 3, **dadurch gekennzeichnet, daß** der Fluorkunststoff Polytetrafluorethylen (PTFE) oder ein Gemisch PTFE-PFA (Perfluoralkoxypolymer) ist.

5. Küchengeräte, die mit einer Beschichtung nach einem der Ansprüche 1 bis 4 beschichtet sind.

6. Verfahren zum Aufbringen einer Beschichtung nach einem der Ansprüche 1 bis 4 auf ein Substrat, **gekennzeichnet durch** die folgenden Schritte:
- man bringt auf das Substrat die aus PEEK bestehende Unterschicht auf,
- man schmilzt diese Unterschicht bei einer Temperatur von mindestens 340° C,
- man bringt auf diese Unterschicht nacheinander die Primärschicht und die Abschlußschicht oder Abschlußschichten auf der Grundlage von PTFE auf, sodann
- man härtet die Gesamtanordnung der Schichten bei 400 bis 420° C.

7. Verfahren nach Anspruch 6, **dadurch gekennzeichnet, daß** das PEEK in Form eines Pulvers mit einer Korngrößenverteilung zwischen 4 und 80 µm bei einer mittleren Korngröße von etwa 20 µm aufgebracht wird.

## Claims

1. A non-stick coating with improved scratch resistance, comprising an undercoat applied to a substrate, coated with a primary coat comprising a fluorocarbon resin and one or more fluorocarbon resin-based outer coats, **characterized in that**, after curing, said undercoat is exclusively constituted by the polymer oxy-1,4-phenylene-oxy-1,4-phenylene-carbonyl-1,4-phenylene, known as PEEK.

2. A coating according to claim 1, **characterized in that** the undercoat constituted by PEEK covers 60% to 95% of the total surface coated by the substrate.

3. A coating according to claim 1 or claim 2, **characterized in that** the thickness of said undercoat is in the range 5 µm to 100 µm.

4. A coating according to any one of claims 1 to 3, **characterized in that** said fluorocarbon resin is polytetrafluoroethylene (PTFE) or a PTFE-PFA (perfluoroalkoxy resin) mixture.

5. Cookware coated with a coating according to any one of claims 1 to 4.

6. A method of applying a coating according to any one of claims 1 to 4 to a substrate, **characterized by** the following steps:
• applying the undercoat constituted by PEEK to the substrate;
• fusing said undercoat at a temperature of at least 340°C;
• applying the PTFE-based primary coat and outer coat or coats in succession to said undercoat; then
• curing the assembly of coats at 400-420°C.

7. A method according to claim 6, **characterized in that** the PEEK is applied in the form of a powder with a grain size in the range 4 µm to 80 µm, the mean grain size being about 20 µm.
